# EUROPEAN PATENT APPLICATION

(11) **EP 4 428 828 A1**
(43) Date of publication of application: **11.09.2024**
(21) Application number: 24161529.3
(22) Date of filing: 05.03.2024
(51) Int. Cl.: G06T 19/20, G06T 15/00, H04W 12/06, H04W 12/10, H04W 12/65

(54) **INFORMATION PROCESSING APPARATUS, INFORMATION PROCESSING METHOD, AND NON-TRANSITORY COMPUTER READABLE STORAGE MEDIUM**

(30) Priority: 10.03.2023 JP 2023037967
(71) Applicant: CANON KABUSHIKI KAISHA, Tokyo 146-8501 (JP)
(72) Inventor: MIDORIKAWA, Waki, Tokyo, 146-8501 (JP)
(74) Representative: Canon Europe Limited

(57) **Abstract**

Editing histories of a plurality of pieces of material data to be used for generating a virtual viewpoint image are acquired. If the acquired editing histories satisfy a predetermined condition of each of the plurality of pieces of material data, authentication information is assigned to the virtual viewpoint image generated on the basis of the plurality of pieces of material data.

## Description

### TECHNICAL FIELD

The present disclosure relates to an apparatus and method for processing information for generating a virtual viewpoint image.

### BACKGROUND OF THE INVENTION

### Description of the Related Art

A known technique for generating a three-dimensional (3D) model indicates a 3D shape of a subject from video captured by a camera or cameras. A virtual viewpoint image can be generated by using the generated 3D model and a virtual camera virtually installed in a virtual space. The 3D model can be generated from captured image data and can also be generated by adding a 3D object rendered by computer graphics (CG) or combining objects obtained by editing existing 3D models generated from the captured image data or CG. Japanese Patent No. 6791530 discloses a method for managing editing of a 3D model.

However, it may not be possible to easily determine, based on the generated 3D model, the virtual viewpoint image, and a material data set, whether material data used for generating the 3D model is appropriately edited. For example, in a virtual viewpoint image used as sports learning material, it is necessary to generate a virtual viewpoint image by using a 3D model that accurately reproduces a teacher's arm or leg motion. In this case, when the position of a body part of the 3D model of the teacher is partly changed, it is not possible to accurately reproduce the teacher's motion, and a virtual viewpoint image which is inappropriate for use as a learning material is generated. A learner views the virtual viewpoint image without knowing that the position of the body part of the 3D model of the teacher has partly been changed, and thus, the learner's understanding will be impacted negatively (e.g., the learner may be taught to perform an erroneous motion).

### SUMMARY OF THE INVENTION

The present disclosure includes the following configurations, methods, and a program. The present disclosure in its first aspect provides an information processing apparatus including: acquisition means configured to acquire editing histories for a plurality of pieces of material data (e.g., the acquisition means may acquire a plurality of editing histories, the plurality of editing histories may comprise an editing history (e.g., a separate editing history) for at least two, and/or each, of the plurality of pieces of material data (e.g., a first editing history for a first piece of material data and a second editing history for a second piece of material data)) to be used for generating a virtual viewpoint image; and assigning means configured to assign authentication information to the virtual viewpoint image generated based on the material data if each of the editing histories of the plurality of pieces of material data (e.g., each of the plurality of editing histories associated with the respective pieces of material data) acquired by the acquisition means satisfies a predetermined condition. According to a second aspect there is provided an apparatus including: acquisition means configured to acquire an editing history of material data to be used for generating a virtual viewpoint image; and assigning means configured to assign authentication information to the material data if the editing history of the material data acquired by the acquisition means satisfies a predetermined condition. According to a third aspect there is provided an apparatus including: acquisition means configured to acquire editing histories for a plurality of pieces of material data (e.g., the acquisition means may acquire a plurality of editing histories, the plurality of editing histories may comprise an editing history (e.g., a separate editing history) for at least two, and/or each, of the plurality of pieces of material data (e.g., a first editing history for a first piece of material data and a second editing history for a second piece of material data)) to be used for generating a virtual viewpoint image; and assigning means configured to assign authentication information to a combination of the plurality of pieces of material data if each of the editing histories of the plurality of pieces of material data acquired by the acquisition means satisfies a predetermined condition.

The present disclosure in its fourth aspect provides an information processing method including acquiring editing histories for a plurality of pieces of material data (e.g., the acquisition means may acquire a plurality of editing histories, the plurality of editing histories may comprise an editing history (e.g., a separate editing history) for at least two, and/or each, of the plurality of pieces of material data (e.g., a first editing history for a first piece of material data and a second editing history for a second piece of material data)) to be used for generating a virtual viewpoint image; and assigning authentication information to the virtual viewpoint image generated based on the material data if the editing history for each of the plurality of pieces of material data acquired in the acquiring satisfies a predetermined condition. According to a fifth aspect there is provided a method including: acquiring an editing history of material data to be used for generating a virtual viewpoint image; and assigning authentication information to the material data if the editing history of the material data acquired in the acquiring satisfies a predetermined condition. According to a sixth aspect there is provided a method including: acquiring editing histories for a plurality of pieces of material data (e.g., the acquisition means may acquire a plurality of editing histories, the plurality of editing histories may comprise an editing history (e.g., a separate editing history) for at least two, and/or each, of the plurality of pieces of material data (e.g., a first editing history for a first piece of material data and a second editing history for a second piece of material data)) to be used for generating a virtual viewpoint image; and assigning authentication information to a combination of the plurality of pieces of material data if each of the editing histories of the plurality of pieces of material data acquired in the acquiring satisfies a predetermined condition.

The present disclosure in its seventh aspect provides a non-transitory computer readable storage medium for storing a program for causing a computer to execute a method according to at least one of the fourth aspect, the fifth aspect and the sixth aspect. Optional features will now be set out. These are applicable singly or in any combination with any aspect of the disclosure. The assigning means (and/or method step) may be configured to not assign the authentication information to the virtual viewpoint image if the editing history of the material data (e.g., at least one of the editing histories of the plurality of pieces of material data) does not satisfy the predetermined condition. The predetermined condition may be set by a creator who has created at least one, and/or a plurality, of the pieces of material data. The predetermined condition may be a condition indicating at least one editing detail for which editing of the plurality of pieces of material data is permitted. The authentication information may comprise information designating an access right for viewing the virtual viewpoint image. The authentication information may be indicated by using an NFT. The material data may be at least one of 3D model data (e.g., indicating a 3D model of an object), audio data, and image data. The material data may be the 3D model data, and the predetermined condition may be at least one of a condition indicating editing details of changing a color of the 3D model, a condition for restricting a position of the 3D model in a virtual space in which the 3D model is arranged, and a condition for restricting the position of the 3D model based on a positional relationship between the 3D model and another 3D model (e.g., a further 3D model different to first 3D model). The acquisition means (and/or method step) may be configured to acquire the (plurality of pieces of) material data based on a user operation. The plurality of pieces of material data may include material data for which an NFT indicating ownership has been issued. The acquisition means (and/or method step) may be configured to acquire the material data for which the user has the ownership. The virtual viewpoint image may be generated based on (a plurality of) captured images obtained by a plurality of image capturing apparatuses. According to an eight aspect there is provided a program for causing a computer to function as at least one, or each, of the units of the apparatus according to any one of the above-described aspects.

Further features of the present disclosure will become apparent from the following description of embodiments with reference to the attached drawings.

### BRIEF DESCRIPTION OF THE DRAWINGS

Fig. 1 is a configuration diagram of an information processing apparatus.
Figs. 2A to 2C are diagrams illustrating authentication conditions of material data.
Fig. 3 is a hardware configuration diagram of the information processing apparatus.
Figs. 4A to 4C are diagrams illustrating authentication information of a virtual viewpoint image according to a first embodiment.
Fig. 5 is a flowchart illustrating an editing process of material data according to the first embodiment.
Fig. 6 is a flowchart illustrating a process of outputting a generated virtual viewpoint image with authentication information assigned according to the first embodiment.
Figs. 7A to 7D are diagrams illustrating a mechanism for determining whether an authentication condition is satisfied when a virtual viewpoint image is generated according to the first embodiment.
Fig. 8 is a diagram illustrating an authentication condition and utilization condition of material data according to a second embodiment.
Fig. 9 is a flowchart illustrating a process for outputting a generated virtual viewpoint image with authentication information assigned according to the second embodiment.
Fig. 10 is a diagram illustrating authentication information of a material data set according to a third embodiment.
Fig. 11 is a flowchart illustrating a process for outputting a material data set with authentication information assigned according to the third embodiment.

### DESCRIPTION OF THE EMBODIMENTS

Hereinafter, preferred embodiments of the present disclosure will be described in detail with reference to the drawings. However, the present disclosure is not limited to the following embodiments. In the drawings, the same or similar components are denoted by the same reference numerals, and a redundant description thereof will be omitted.

### First Embodiment

In the present embodiment, an authentication condition indicating an editable range is set to material data in advance. If an editing history of each piece of material data designated by a user satisfies the authentication condition, then authentication information is assigned to a virtual viewpoint image generated by using each piece of material data.

The virtual viewpoint image according to the present embodiment is also referred to as a virtual viewpoint video. However, the virtual viewpoint image is not limited to an image corresponding to a viewpoint designated freely (as desired) by the user, and includes, for example, an image corresponding to a viewpoint selected by the user from a plurality of candidates. In addition, the present embodiment mainly describes a case where the virtual viewpoint is designated by a user operation. However, the virtual viewpoint may be automatically designated based on image analysis results or the like. Furthermore, the present embodiment mainly describes a case where the virtual viewpoint image is a moving image. However, the virtual viewpoint image may be a still image.

Viewpoint information to be used for generating the virtual viewpoint image is information indicating the position and orientation (e.g., line-of-sight direction) of the virtual viewpoint. Specifically, the viewpoint information is a parameter set including parameters representing a three-dimensional position of the virtual viewpoint and parameters representing the orientation of the virtual viewpoint in the pan, tilt, and roll directions. Note that details of the viewpoint information are not limited to the above. For example, the parameter set as the viewpoint information may include a parameter representing the size (e.g., angle of view) of the visual field of the virtual viewpoint. In addition, the viewpoint information may include a plurality of parameter sets. For example, the viewpoint information may include a plurality of parameter sets respectively corresponding to a plurality of frames constituting the moving image of the virtual viewpoint image, and may indicate the position and orientation of the virtual viewpoint at each of a plurality of consecutive time points.

For example, the virtual viewpoint image is generated by the following method. First, a plurality of images (e.g., multi-viewpoint images) are acquired by a plurality of image capturing apparatuses capturing images from different directions. Subsequently, from the multi-viewpoint images, a foreground image and a background image are acquired. The foreground image is obtained by extracting a foreground region corresponding to a predetermined object, such as a human figure or a ball. The background image is obtained by extracting a background region, which is other than the foreground region. In addition, based on the foreground image, a foreground model and texture data are generated. The foreground model represents a three-dimensional shape of the predetermined object. The texture data is for coloring the foreground model. Furthermore, based on the background image, texture data is generated. The texture data is for coloring a background model representing a three-dimensional shape of a background, such as a stadium. Subsequently, the texture data is mapped to the foreground model and the background model, and rendering is performed in accordance with the virtual viewpoint indicated by the viewpoint information, thereby generating a virtual viewpoint image. However, the method for generating a virtual viewpoint image is not limited to this, and various methods can be used, such as a method for generating a virtual viewpoint image by projective transformation of a captured image without using a three-dimensional model.

The foreground image is an image obtained by extracting the region (e.g., foreground region) of the object from a captured image, which is acquired by being captured by an image capturing apparatus. The object extracted as the foreground region refers to a dynamic object (e.g., a moving object), which has motions (i.e., whose absolute position and shape can change) when images are captured in a time-series manner from the same direction. Examples of the object include a human figure, such as a player or a referee in a field where a game is played; a ball or the like in a ball game; and a singer, a player, a performer, or a moderator in a concert or entertainment.

The background image is at least an image of the region (e.g., background region) different from the object serving as the foreground. Specifically, the background image is an image obtained by removing the object serving as the foreground from the captured image. In addition, the background is an imaging target that is stationary or remains in a state close to a stationary state when images are captured in a time-series manner from the same direction. Examples of such an imaging target include a stage of a concert or the like, a stadium where an event such as a game is held, a structure such as a goal used in a ball game, a field, and the like. However, the background is at least a region different from the object serving as the foreground, and the imaging target may include another item or the like in addition to the object and the background.

In the present embodiment, data for generating a virtual viewpoint image is referred to as material data. The material data is a captured image, which is captured by an image capturing apparatus, and data generated based on the captured image. Examples of the material data generated based on the captured image include data of a foreground image and a background image extracted from the captured image, 3D model data representing the shape of an object in a three-dimensional space, texture data for coloring the 3D model, and the like. Note that the 3D model includes a foreground model, which is a 3D model of an object in the foreground region, and a background model, which is a 3D model of an object in the background region.

Note that the type of material data is not limited as long as it is data for generating a virtual viewpoint image. For example, the material data may include a camera parameter representing an image capturing condition of an image capturing apparatus that acquires a captured image. Examples of the material data in a case where a virtual viewpoint image is generated by using a 3D model are described above. However, in a case where a virtual viewpoint image is generated by using image-based rendering without using a 3D model, the material data may differ from the above material data.

In this manner, the material data may differ according to the method for generating a virtual viewpoint image.

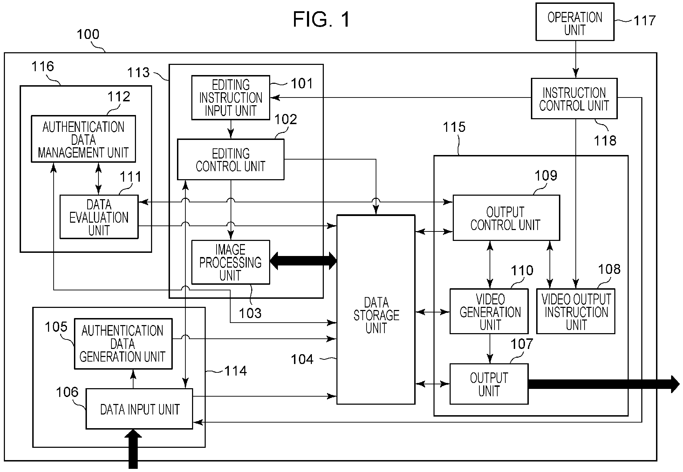

Fig. 1 is a configuration diagram of an information processing apparatus 100.

The information processing apparatus 100 includes an editing unit 113, an input unit 114, an output unit 115, an authentication unit 116, an operation unit 117, an instruction control unit 118, and a data storage unit 104. The output unit 115 can output a virtual viewpoint image with authentication information. The authentication unit 116 manages the authentication information. The data storage unit 104 holds data used in these processes.

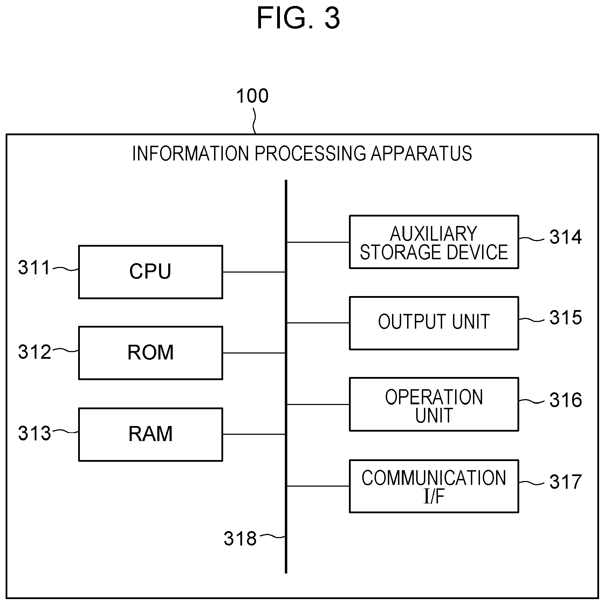

Fig. 3 is a hardware configuration diagram for implementing the information processing apparatus 100.

The information processing apparatus 100 includes a central processing unit (CPU) 311, a read only memory (ROM) 312, a random access memory (RAM) 313, an auxiliary storage device 314, an output unit 315, an operation unit 316, a communication interface (I/F) 317, and a bus 318. The CPU 311 uses computer programs and data stored in the ROM 312 and the RAM 313 to perform control of each unit of the information processing apparatus 100 and arithmetic processing for material data input from the communication I/F 317. The information processing apparatus 100 may include one or more pieces of dedicated hardware different from the CPU 311, and may be configured to execute at least a part of the processing by the CPU 311. Examples of the dedicated hardware include a processor used for image processing and control, an application specific integrated circuit (ASIC), a field programmable gate array, a graphics processing unit (GPU), and a digital signal processor (DSP). The ROM 312 stores programs and the like that do not need to be changed. The RAM 313 temporarily stores programs supplied from the auxiliary storage device 314, data used when each functional block of the information processing apparatus 100 operates, and images and audios output via the communication I/F 317.

Hereinafter, data such as an image or audio used for generating a virtual viewpoint image is referred to as material data. The auxiliary storage device 314 is configured by, for example, a hard disk or a solid state drive. The auxiliary storage device 314 stores a program used for editing the material data and generating the virtual viewpoint image, the material data, an editing history thereof, and authentication information thereof. The output unit 315 includes a liquid crystal display and a video streaming connection I/F, and displays a graphical user interface (GUI) for operation of the information processing apparatus 100 and processing results of the information processing apparatus 100. The operation unit 316 is used for editing the material data, inputting a camera path for the virtual viewpoint image, inputting a generation instruction of the virtual viewpoint image, and the like. The operation unit 316 includes, for example, a keyboard, a mouse, a joy stick, a touch panel, or the like. The communication I/F 317 in Fig. 3 is used for communication between the information processing apparatus 100 and an external device. The external device is, for example, a data server that holds external data such as music or CG to be included in a virtual viewpoint image or to which a generated virtual viewpoint image is uploaded. When the information processing apparatus 100 is connected to an external device in a wired manner, a communication cable is connected to the communication I/F 317. When the information processing apparatus 100 has a function of wirelessly communicating with an external device, the communication I/F 317 includes an antenna. The bus 318 connects each unit of the information processing apparatus 100 and transmits information.

As the type of authentication information assigned to the virtual viewpoint image generated by the information processing apparatus 100, a value defined in advance in the information processing apparatus 100 is used. Also, an authentication server or the like used for managing the authentication information uses a value defined in advance in the information processing apparatus 100.

Hereinafter, data assigned to the material data in order to determine whether it is possible to assign the authentication information to the virtual viewpoint image is referred to as an authentication condition. The authentication condition indicates a condition of editing details for which editing of the material data is permitted. The output unit 115 performs setting of each block in the information processing apparatus 100 used for assigning the authentication information to the virtual viewpoint image and generating or updating the authentication condition of each piece of material data.

Referring back to Fig. 1, functional blocks of the information processing apparatus 100 will be described.

The input unit 114 includes an authentication data generation unit 105 and a data input unit 106.

The authentication data generation unit 105 initializes an editing history and an authentication condition of material data by assigning initial values of the editing history and the authentication condition to the material data, based on an instruction received by the data input unit 106. The authentication data generation unit 105 transmits, to the data storage unit 104, the material data whose editing history and authentication condition are initialized. When a plurality of pieces of material data are handled as one combination (e.g., a set of material data), an authentication condition obtained by combining authentication conditions corresponding to the respective pieces of material data may be provided, or a common authentication condition may be provided.

The data input unit 106 acquires the material data from a camera or an external data server. In the present embodiment, it is assumed that the authentication condition of the material data is also acquired when the material data is acquired. The authentication condition may be set by a creator of the material data, or may be set by a user who has issued an instruction to the data input unit 106 by using the operation unit 117. Whether the authentication condition is set for the acquired material data may be defined in advance and set in the data input unit 106. For example, a method for determining whether data can be edited may be changed depending on an input device or a data source, or details for determining whether editing is possible may be determined for each data format. The data input unit 106 transmits the acquired material data and authentication condition to the authentication data generation unit 105. If the data input unit 106 acquires material data whose editing history and authentication condition are set in advance, the data input unit 106 may directly transmit the material data to the data storage unit 104 without transmitting it via the authentication data generation unit 105.

The editing unit 113 includes an editing instruction input unit 101, an editing control unit 102, and an image processing unit 103.

The editing instruction input unit 101 receives an editing instruction of the material data from a user via the operation unit 117 and the instruction control unit 118. An editing target is the material data to be used for generating a virtual viewpoint image, such as video or audio captured by a camera, existing 3D model data, a music file, a 2D image, and acquired sensor data. The editing instruction may include, in addition to an instruction to edit individual piece of material data, an instruction to perform a combining process of two or more pieces of the material data. Examples of a process handling a plurality of pieces of material data include combination of audio and video, combination or position change of a background and a foreground, and replacement of texture attached to a 3D object.

The editing control unit 102 generates an editing process command to be executed by the image processing unit 103 on the editing-target material data, based on the editing instruction from the editing instruction input unit 101. The editing process command includes at least data necessary for an editing operation that defines correction details of the material data and for calculating a time code of an edited image frame in the virtual viewpoint image. The editing control unit 102 stores the editing process command issued to the material data in the editing history of the editing-target material data. When calculation results of the editing process by the image processing unit 103 are to be included in the editing history of the editing process command, the editing control unit 102 instructs the image processing unit 103 to output a log necessary for updating the editing history, and acquires the results to update the editing history.

The image processing unit 103 acquires the material data from the data storage unit 104, executes the editing process command, and transmits the edited material data to the data storage unit 104. When the authentication condition needs to be divided or integrated in accordance with the editing of the material data, the editing control unit 102 updates the authentication condition.

For example, when two or more pieces of material data are edited to be combined together, authentication conditions of the respective pieces of material data are combined. Furthermore, when there is a use restriction or an editing history in the material data used as an input at the time of registration of a 3D model, it is necessary to take over (e.g., transfer) the information to the edited 3D model data. In this case, the editing control unit 102 generates an authentication condition to be assigned to the edited 3D model data.

The output unit 115 includes an output unit 107, a video output instruction unit 108, an output control unit 109, and a video generation unit 110.

The output unit 107 outputs a virtual viewpoint image generated by the video generation unit 110 to an external device (not illustrated).

The video output instruction unit 108 receives a generation instruction of the virtual viewpoint image from the instruction control unit 118. The generation instruction of the virtual viewpoint image according to the present embodiment includes, in addition to a time code of video and a camera path of the virtual viewpoint image to be output, setting of whether to assign authentication information to the generated virtual viewpoint image and the type of the authentication information to be assigned. As the authentication information to be assigned to the virtual viewpoint image, authentication information designated by the user is used, such as a non-fungible token (NFT) for managing ownership or the number of times of issuance, a copyright, an access right for viewing the virtual viewpoint image, or an electronic certificate indicating authenticity.

Authentication information that can be assigned may be provided in advance, and the user may select the authentication information. The video output instruction unit 108 transmits the received generation instruction of the virtual viewpoint image to the output control unit 109.

Based on the generation instruction received from the video output instruction unit 108, the output control unit 109 designates the camera path, the material data to be used for generating the virtual viewpoint image, and start and end time codes, and instructs the video generation unit 110 to generate the virtual viewpoint image. At this time, from the data storage unit 104, the material data to be used for generating the virtual viewpoint image, the authentication condition of the material data, and the editing history thereof are acquired. Upon reception of a notification that the generation of the virtual viewpoint image has been completed from the video generation unit 110, the output control unit 109 instructs a data evaluation unit 111 to check the generated virtual viewpoint image and the authentication condition of the material data, determine whether it is possible to assign the authentication information to the generated virtual viewpoint image, and register the authentication information.

The video generation unit 110 generates the virtual viewpoint image of the designated camera path from the material data stored in the data storage unit 104.

The authentication unit 116 includes the data evaluation unit 111 and an authentication data management unit 112.

The data evaluation unit 111 determines whether it is possible to assign the authentication information of the virtual viewpoint image as instructed by the output control unit 109. The data evaluation unit 111 determines whether it is possible to assign the authentication information by acquiring the virtual viewpoint image as instructed by the output control unit 109 and the authentication condition thereof from the data storage unit 104 and analyzing the editing history and the generated virtual viewpoint image. If a condition requiring re-checking of the authentication information is included in the authentication condition of data used as an input when the virtual viewpoint image is generated, the authentication information of the material data is inquired by using the authentication data management unit 112.

Based on the instruction acquired from the output control unit 109, the authentication data management unit 112 inquires the authentication information of the material data used for generating the virtual viewpoint image and registers and manages the authentication information of the generated virtual viewpoint image.

The operation unit 117 receives an input for designating a camera path of a virtual camera, an input for selecting the material data to be used for generating the virtual viewpoint image, and an input for designating start and end time codes. For example, the operation unit 117 includes an input member, such as a joy stick, a jog dial, a touch panel, a keyboard, or a mouse. The input member is operated by a client to designate the camera path or material data. The operation unit 117 transmits the received input to the instruction control unit 118.

In response to the input acquired from the operation unit 117, the instruction control unit 118 transmits an instruction to each unit, based on input details. For example, if the input is to register the material data in the data storage unit 104, the instruction control unit 118 transmits an instruction to the data input unit 106. If the input is to edit the material data, the instruction control unit 118 transmits an instruction to the editing instruction input unit 101. If the input is to generate the virtual viewpoint image, the instruction control unit 118 transmits an instruction to the video output instruction unit 108.

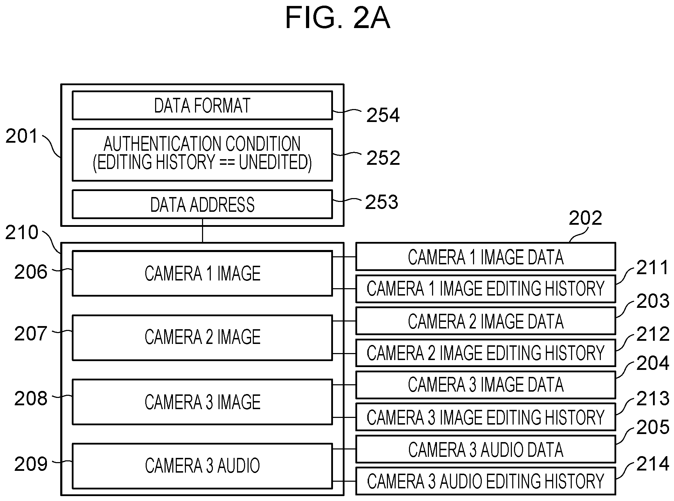

The data storage unit 104 stores the material data and metadata assigned to the material data. The metadata will be described with reference to Figs. 2A to 2C. Note that the data storage unit 104 may store the virtual viewpoint image generated by the video generation unit 110 and metadata assigned to the virtual viewpoint image. Although the present embodiment assumes the data storage unit 104 incorporated in the information processing apparatus 100, the data storage unit 104 is not limited to this. For example, an external device may be provided as a storage device.

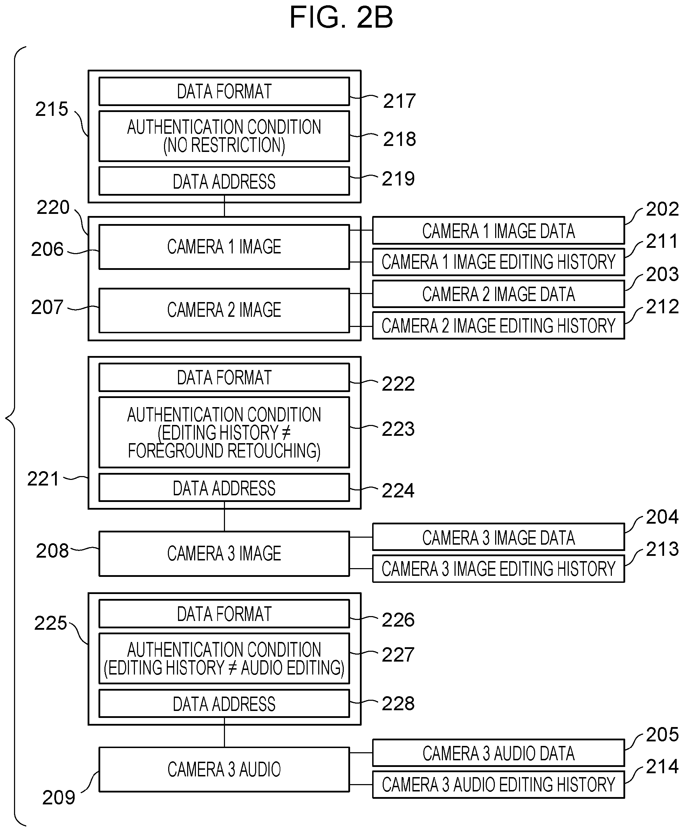

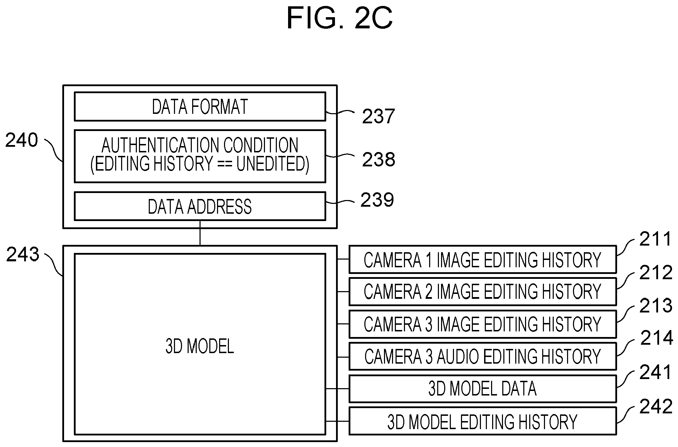

Figs. 2A to 2C are diagrams illustrating authentication conditions of material data. In Figs. 2A and 2B, material data is a camera 1 image to a camera 3 image and a camera 3 audio captured by a camera array connected to the information processing apparatus 100, and an authentication condition of each piece of material data is illustrated. In Fig. 2C, material data is a 3D model generated based on the camera 1 image to the camera 3 image and the camera 3 audio.

Fig. 2A illustrates an example in which the camera 1 image to the camera 3 image and the camera 3 audio are handled as one combination of material data (hereinafter referred to as a material data set 1). For a pointer table 210 of the material data set 1, metadata 201 is set. The metadata 201 includes a data format 254, an authentication condition 252, and a data address 253. The pointer table 210 is associated with camera 1 image data 202 to camera 3 image data 204, a camera 1 image editing history 211 to a camera 3 image editing history 213, camera 3 audio data 205, and a camera 3 audio editing history 214. Note that the pointer table 210 includes a camera 1 image pointer 206 to a camera 3 audio pointer 209. The data format 254 indicates a data structure of each piece of material data of the pointer table 210. As the authentication condition 252, an authentication condition of each piece of material data is stored. As the data address 253, pointers used for accessing the material data and the editing histories are stored. It is assumed that each pointer in the present embodiment is an address in the data storage unit 104 at which the corresponding editing history or material data is arranged. In Fig. 2A, as the authentication condition 252, "editing history == unedited" is set, indicating that it is possible to assign authentication information to a virtual viewpoint image or 3D model generated by using the material data set 1 if the material data set 1 is unedited. That is, when a virtual viewpoint image or 3D model is generated by using the material data set 1, if each piece of material data is edited, it is not possible to assign the authentication information to the generated virtual viewpoint image or 3D model. The process of assigning the authentication information will be described later.

Fig. 2B illustrates an example in which the camera 1 image and the camera 2 image are handled as one combination of material data (hereinafter referred to as a material data set 2), and metadata is assigned to the camera 1 image and the camera 2 image, the camera 3 image, and the camera 3 audio.

For a pointer table 220 of the material data set 2, metadata 215 is set. The metadata 215 includes a data format 217, an authentication condition 218, and a data address 219. The pointer table 220 is associated with the camera 1 image data 202 and the camera 2 image data 203, the camera 1 image editing history 211 and the camera 2 image editing history 212, and includes the camera 1 image pointer 206 and the camera 2 image pointer 207. As the authentication condition 218, "no restriction" is set, indicating that it is possible to assign authentication information to a virtual viewpoint image or 3D model generated by using the material data set 2 even if the material data set 2 is edited. That is, when a virtual viewpoint image or 3D model is generated by using only the material data set 2, even if the camera 1 image and the camera 2 image are edited, the authentication information is assigned to the generated virtual viewpoint image or 3D model. However, when a virtual viewpoint image is generated by using other material data in addition to the material data set 2, it is determined whether to assign the authentication information to the generated virtual viewpoint image depending on to an authentication condition of the other material data.

For the camera 3 image pointer 208, metadata 221 is set. The metadata 221 includes a data format 222, an authentication condition 223, and a data address 224. The camera 3 image pointer 208 is associated with the camera 3 image data 204 and the camera 3 image editing history 213. As the authentication condition 223, "editing history ≠ foreground retouching" is set, indicating that it is possible to assign authentication information to a virtual viewpoint image or 3D model generated by using the camera 3 image if a subject (e.g., foreground) included in the image is not edited. In this case, if the subject in the camera 3 image is edited, the authentication information is not assigned to the virtual viewpoint image or 3D model generated by using the camera 3 image. Note that in a case where there are a plurality of subjects in the image, information for specifying a subject for which editing is restricted may be set in the authentication condition. For example, in a case where a player A is captured at the center of the angle of view and a player B is captured at the edge in the image, the editing restriction is valid for the player A and the editing restriction is not set for the player B. In this manner, it is possible to clarify a target for which the editing restriction is valid even if there are a plurality of subjects in the image.

For the camera 3 audio pointer 209, metadata 225 is set. The metadata 225 includes a data format 226, an authentication condition 227, and a data address 228. The camera 3 audio pointer 209 is associated with the camera 3 audio data 205 and the camera 3 audio editing history 214. As the authentication condition 227, "editing history ≠ audio editing" is set, indicating that it is possible to assign the authentication information to a virtual viewpoint image or 3D model generated by using the camera 3 audio if the audio is not edited.

When a virtual viewpoint image or 3D model is generated by using the material data set 2, the camera 3 image, and the camera 3 audio illustrated in Fig. 2B, metadata corresponding to each pointer is combined as authentication conditions. Specifically, the authentication conditions are "no restriction" for the material data set 2, "editing history ≠ foreground retouching" for the camera 3 image, and "editing history ≠ audio editing" for the camera 3 audio.

Fig. 2C illustrates an example of the authentication condition in a 3D model generated by using the camera 1 image to the camera 3 image and the camera 3 audio.

For a 3D model pointer 243, metadata 240 is set. The metadata 240 includes a data format 237, an authentication condition 238, and a data address 239. The 3D model pointer 243 is associated with 3D model data 241, the editing histories 211 to 214 of the camera 1 image to the camera 3 image and the camera 3 audio used for generating the 3D model data, and a 3D model editing history 242. As the camera 1 image editing history 211 to the camera 3 audio editing history 214, editing histories when the 3D model data 241 is generated are recorded. Since the authentication condition 238 is "editing history == unedited", it is possible to assign authentication information to a virtual viewpoint image generated by using the 3D model data 241 that is not edited. It is assumed that the authentication condition in the 3D model generated by using the camera 1 image to the camera 3 image and the camera 3 audio is set separately when the 3D model is generated.

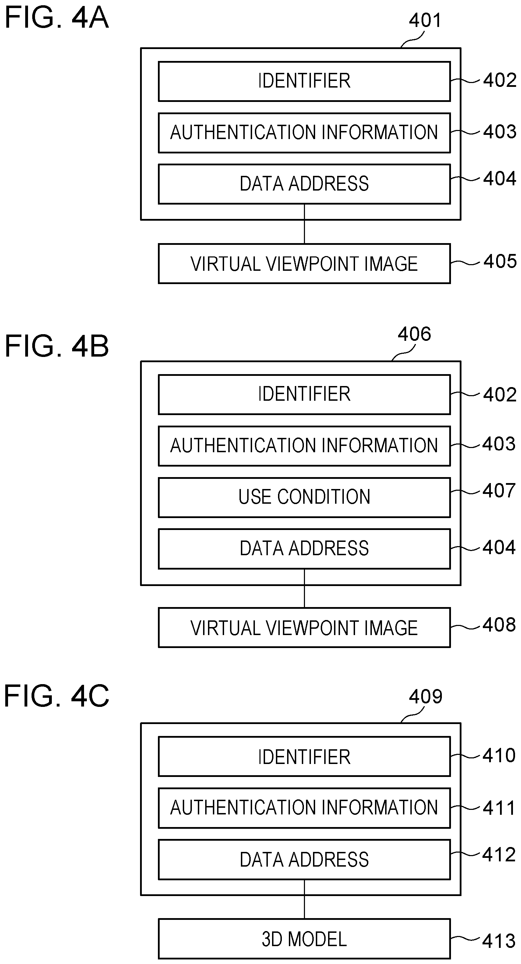

Figs. 4A to 4C are diagrams illustrating authentication information of a virtual viewpoint image.

Fig. 4A illustrates an example in which authentication information that proves high reliability of a virtual viewpoint image is assigned. Metadata 401 of a virtual viewpoint image 405 includes an identifier 402 for identifying material data used for generating the virtual viewpoint image 405, authentication information 403, and a data address 404. The authentication information 403 is information indicating whether the authentication information is assigned to the virtual viewpoint image 405. In the present embodiment, the metadata 401 may include the authentication information 403 in a case where the authentication information is assigned to the virtual viewpoint image 405, and the metadata 401 may not include the authentication information 403 in a case where the authentication information is not assigned to the virtual viewpoint image 405. It is only necessary to determine whether the authentication information is assigned. If the authentication information is assigned, the authentication information is assigned and also details of the authentication information are included. In the present embodiment, an electronic certificate is included, indicating that the virtual viewpoint image 405 is a virtual viewpoint image generated with the authentication condition satisfied. In addition to the electronic certificate, an NFT may be issued and managed by using a blockchain.

Fig. 4B illustrates an example in which authentication information including designation of a use condition of a virtual viewpoint image is further assigned. Metadata 406 includes a use condition 407 to be referred to by the authentication data management unit 112 at the time of an access request to a virtual viewpoint image 408 or at the time of secondary use. In the use condition 407, a use condition at the time of using material data, which is taken over from the material data, and a use condition regarding the use of the virtual viewpoint image 408 are set and used. For example, when the virtual viewpoint image 408 is to be distributed, the virtual viewpoint image 408 on which an icon indicating an electronic certificate included in the use condition 407 is superimposed needs to be distributed. Note that a time limit for viewing the virtual viewpoint image or a restriction on secondary use may be set as the use condition.

Fig. 4C illustrates an example in which a 3D model, not a virtual viewpoint image, generated by using material data is distributed. For a 3D model 413, metadata 409 is set. The metadata 409 includes an identifier 410 of material data used for generating the 3D model 413, authentication information 411, and a data address 412. The authentication information 411 is information indicating whether the authentication information is assigned to the 3D model 413.

In the above manner, it is possible to clarify whether material data used for generating a virtual viewpoint image or 3D model satisfies an authentication condition, and it is possible to generate a highly reliable virtual viewpoint image.

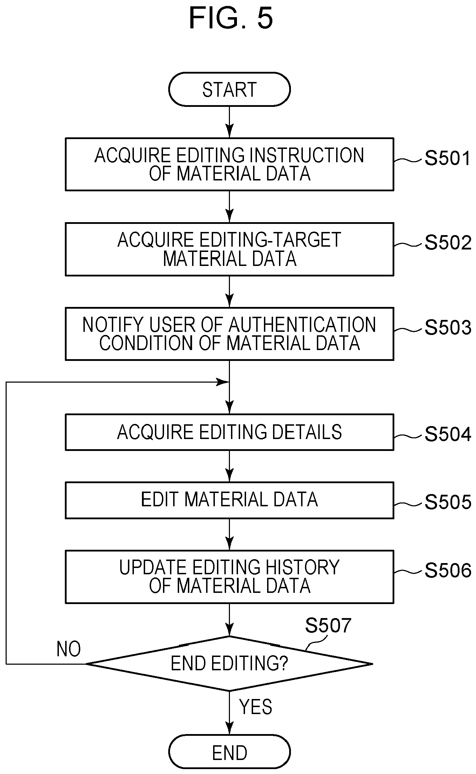

Fig. 5 is a flowchart illustrating an editing process of material data.

In S501, via the operation unit 117 and the instruction control unit 118, the editing instruction input unit 101 acquires an editing instruction of material data owned by a user. The editing instruction includes information for specifying editing-target material data and user account information. The editing instruction input unit 101 generates an editing process command based on the acquired editing instruction, and transmits the editing process command to the editing control unit 102.

In S502, the editing control unit 102 acquires the editing-target material data, an authentication condition of the material data, and an editing history of the material data from the data storage unit 104. In a case where an NFT is issued to the material data, the editing-target material data may be specified by referring to transaction data of a block chain (not illustrated) based on the account information acquired in S501.

In S503, the image processing unit 103 generates an image indicating the acquired authentication condition of the material data, and notifies the user of the image by using a display apparatus (not illustrated).

In S504, the editing instruction input unit 101 acquires editing details of the material data based on a user operation via the operation unit 117 and the instruction control unit 118. The editing details are, for example, details for changing the texture of a 3D model. The editing instruction input unit 101 transmits the acquired editing details to the editing control unit 102.

In S505, the editing control unit 102 edits the material data according to the acquired editing details. Subsequently, the editing control unit 102 outputs an instruction to generate an image indicating the edited material data to the image processing unit 103, and the user is notified of the image by using the display apparatus (not illustrated).

In S506, the editing control unit 102 updates the editing history of the material data by adding the editing details in S505 to the editing history of the material data acquired in S502. The editing control unit 102 transmits the updated editing history of the material data to the data storage unit 104, and the data storage unit 104 stores the editing history as the most recent editing history. Note that the data storage unit 104 may store only the most recent editing history. In this case, the date and time of each editing and account information are also stored in the editing history.

In S507, the editing control unit 102 waits until the next instruction is acquired. If the acquired instruction is an instruction to end editing, the editing process is ended. Note that, in S506, the editing history of the material data is updated each time the material data is edited. However, the present disclosure is not limited to this, and editing histories may be collectively updated when an instruction to end editing is received. If the acquired instruction is not an instruction to end editing, the process proceeds to S504.

Through the above process, the editing history of the material data can be updated.

In the present embodiment, it is assumed that the editing details that do not satisfy the authentication condition of the material data are also reflected in the material data. However, the present disclosure is not limited to this. In a case where the editing details acquired in S504 do not satisfy the authentication condition of the material data, editing may be restricted not to be performed.

In the present embodiment, it is assumed that the data storage unit 104 is provided inside the information processing apparatus 100. In a case where the data storage unit 104 is configured by an external device, when the editing history is updated in S506, information to be transmitted, for example, the editing history, may be encrypted to prevent the editing history from being altered. In this case, an encryption key is shared with the external device in advance.

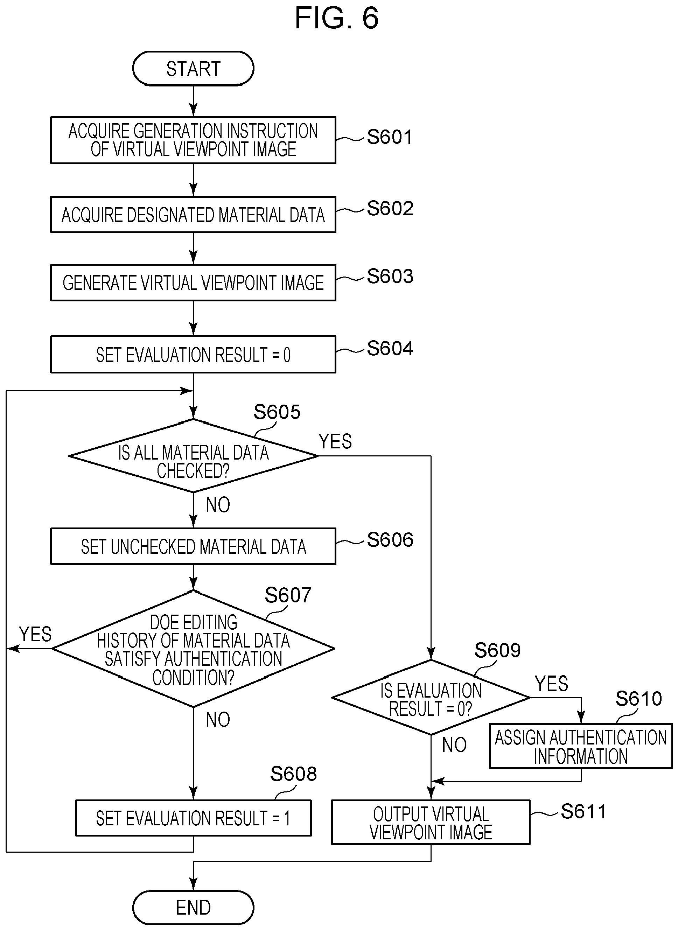

Fig. 6 is a flowchart illustrating a process of outputting a generated virtual viewpoint image with authentication information assigned.

In S601, the video output instruction unit 108 acquires a generation instruction of a virtual viewpoint image from a user via the operation unit 117 and the instruction control unit 118. Note that the generation instruction includes an instruction specifying a camera path of a virtual viewpoint, material data to be used for generating a virtual viewpoint image, and a time code. The acquired generation instruction is transmitted to the output control unit 109.

In S602, based on the acquired generation instruction, the output control unit 109 instructs the data storage unit 104 to transmit, to the video generation unit 110, the material data to be used for generation. The output control unit 109 further instructs the data storage unit 104 to transmit, to the output control unit 109, an editing history and an authentication condition of the material data. As a result, the video generation unit 110 acquires the material data designated by the generation instruction, and the output control unit 109 acquires the editing history and the authentication condition of the designated material data. Note that the output control unit 109 transmits the camera path and the time code acquired in S601 to the video generation unit 110.

In S603, the video generation unit 110 generates a virtual viewpoint image based on the material data, the camera path, and the time code acquired in S602. The generated virtual viewpoint image is transmitted to the output unit 107 and the data storage unit 104.

In S604, the data evaluation unit 111 sets an initial value to an evaluation result. In the present embodiment, the evaluation result = 0 is set.

In S605, the data evaluation unit 111 determines whether editing histories and authentication conditions of all the material data used for the virtual viewpoint image generated in S603 have been checked. If all the material data is checked, the process proceeds to S609. If not, the process proceeds to S606.

In S606, the data evaluation unit 111 sets, as an evaluation target, material data that has not been checked.

In S607, the data evaluation unit 111 determines whether the editing history of the material data that is set as the evaluation target satisfies the authentication condition of the material data. For example, if the material data is a 3D model that does not have an editing history ("editing history == unedited") and the authentication condition is not to change the three-dimensional shape of the 3D model, it is determined that the authentication condition is satisfied. If the authentication condition is satisfied, the process proceeds to S605. If the authentication condition is not satisfied, the process proceeds to S608.

In S608, the data evaluation unit 111 sets the evaluation result to 1. Note that the same evaluation result is applied to all the material data used for generating the virtual viewpoint image. That is, among pieces of the material data used for generating the virtual viewpoint image, if there is even one piece of material data not satisfying the authentication condition, the evaluation result = 1 is set, and if there is no piece of material data not satisfying the authentication condition, the evaluation result = 0 is set.

In S609, the data evaluation unit 111 determines whether the evaluation result = 0 is set as a result of checking all the material data used for generating the virtual viewpoint image. If the evaluation result = 0 is set, the process proceeds to S610. If the evaluation result = 0 is not set, the process proceeds to S611.

In S610, the data evaluation unit 111 assigns authentication information to the virtual viewpoint image. Specifically, the data evaluation unit 111 instructs the authentication data management unit 112 to assign the authentication information, and the authentication data management unit 112 registers the authentication information to be assigned to the virtual viewpoint image. Upon completion of the registration of the authentication information, the authentication data management unit 112 notifies the data evaluation unit 111 of the completion of the registration. The data evaluation unit 111 outputs the registered authentication information to the data storage unit 104, and the data storage unit 104 stores the authentication information as metadata of the virtual viewpoint image. If an NFT is used as the authentication information, a process of issuing the NFT is performed.

In S611, the output unit 107 outputs the generated virtual viewpoint image to an external device.

If the authentication information is assigned in S610, information or an image indicating that the authentication information is assigned may also be output. For example, an icon or image indicating that the authentication information is assigned is provided and is output by being superimposed on the generated virtual viewpoint image.

Through the above process, the authentication information can be assigned only to the virtual viewpoint image generated by using the material data satisfying the authentication condition, which can clarify that the material data used for generating the virtual viewpoint image is appropriately utilized.

In the present embodiment, the process of assigning the authentication information when generating the virtual viewpoint image has been described. However, the present disclosure is not limited to this. Also in a process of generating a 3D model instead of the virtual viewpoint image, whether to assign the authentication information is examined through the process from S605 to S610.

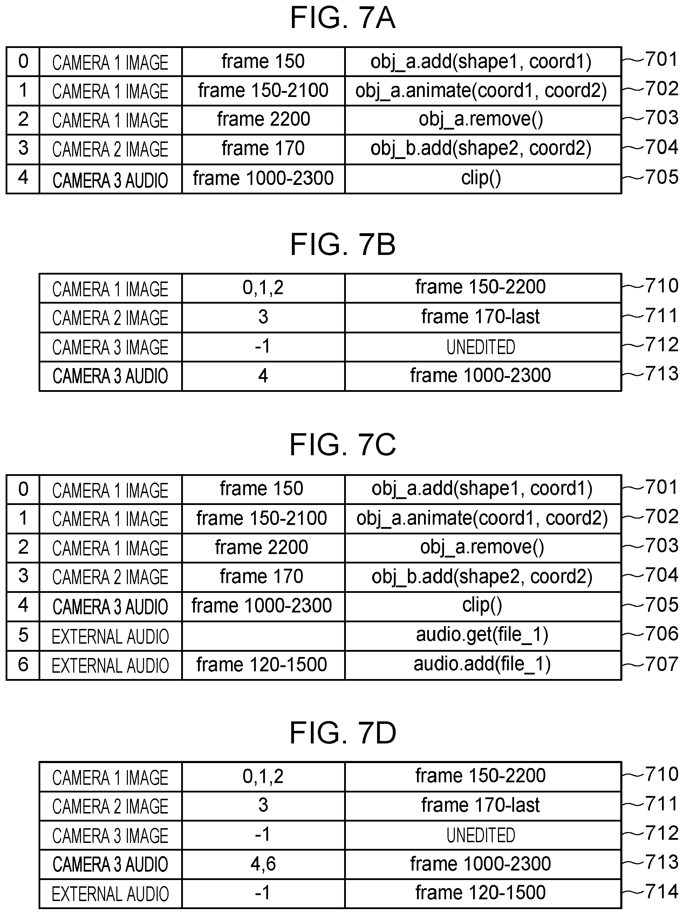

Figs. 7A to 7D are diagrams illustrating processes of editing process commands for material data to be used for generating a virtual viewpoint image. Note that Figs. 7A and 7B illustrate examples of processes of editing process commands for the material data in Fig. 2A, and Figs. 7C and 7D illustrate examples of processes of editing process commands in which external audio material data is further added to the material data in Fig. 2A.

Editing process commands 701 to 703 in Fig. 7A are editing process commands for the camera 1 image. The editing process command 701 is to add an object obj_a having a shape defined by shape 1 to coordinates coord1 in frame 150 of the camera 1 image. The editing process command 702 is to animate the object obj_a added to the coordinates coord1 by the editing process command 701 to coordinates coord2 before frame 2100. The editing process command 703 to remove the object obj_a in frame 2200. In response to the editing process commands 701 to 703, the editing control unit 102 generates an editing history 710. In addition, the editing control unit 102 assigns an identification ID to each of the editing process commands, and stores the editing process commands 701 to 703. The editing history 710 includes 0 to 2, which are the IDs of the editing process commands for the camera 1 image, and information of frames 150 to 2200 influenced by the editing. After the editing process commands are stored, the camera 1 image editing history 211 in Fig. 2 is recorded based on the editing process commands 701 to 703.

An editing process command 704 is an editing process command for the camera 2 image. The editing process command 704 is to add an object obj_b defined by shape2 to the coordinates coord2 in frame 170. Since the object obj_b is not removed, the image processing unit 103 adds the object obj_b up to the last frame of the camera 2 image. In response to the editing process command 704, the editing control unit 102 generates an editing history 711. The editing history 711 includes 3, which is the ID of the editing process command for the camera 2 image, and information of frame 170 to the last frame of the camera 2 image, which are influenced by the editing. The camera 3 image is not edited. An editing history 712 remains unchanged at -1 indicating unedited. After the editing process command is stored, the camera 2 image editing history 212 in Fig. 2 is recorded based on the editing process command 704.

An editing process command 705 is an editing process command for the camera 3 audio. The editing process command 705 is to clip a recording-time audio input in synchronization with frames 1000 to 2300 of the camera 3 image. The editing control unit 102 generates an editing history 713 for the editing process command 705. The editing history 713 includes 4, which is the ID of the editing process command for the camera 3 audio, and information of frames 1000 to 2300 influenced by the editing. After the editing process command is stored, the camera 3 audio editing history 214 in Fig. 2 is recorded based on the editing process command 705.

Fig. 7B is a diagram illustrating the editing history of each piece of material data.

The video generation unit 110 generates a virtual viewpoint image by using the material data in the data storage unit 104. Upon completion of the generation of the virtual viewpoint image, the output control unit 109 outputs, to the data evaluation unit 111, the number of the frame referred to when the virtual viewpoint image is generated, and the editing history 710. The data evaluation unit 111 checks the editing history of the material data used for generating the virtual viewpoint image in order to determine whether it is possible to assign the authentication information.

The generation of a virtual viewpoint image by using material data having the metadata 201 in Fig. 2A will be considered. The authentication condition 252 permits the assignment of the authentication information on condition that the material data is not edited. When the virtual viewpoint image is generated by using the camera 1 image, the camera 2 image, the camera 3 image, and the camera 3 audio, the video generation unit 110 refers to the editing history 710 to the editing history 713 illustrated in Fig. 7B. The editing history 710 indicates that editing has been performed on frames 150 to 2200 of the camera 1 image, the editing history 711 indicates that editing has been performed on frame 170 and subsequent frames of the camera 2 image, and the editing history 713 indicates that editing has been performed on frames 1000 to 2300 of the camera 3 audio. The data evaluation unit 111 determines that it is possible to assign the authentication information to the virtual viewpoint image of frames 0 to 149 in which the image is not edited, and that it is not possible to assign the authentication information to frame 150 and subsequent frames. As described above, the editing history of each piece of material data is referred to, and if there is even one piece of material data not satisfying the authentication condition, the data evaluation unit 111 determines that it is not possible to assign the authentication information. If a plurality of pieces of authentication information are to be assigned, the authentication condition may be divided into a plurality of conditions, and whether it is possible to assign the authentication information may be determined in accordance with the editing process command of the material data.

The requirement for assigning the authentication information to the virtual viewpoint image can be changed by an instruction from the video output instruction unit 108. For example, a case will be considered in which, when a virtual viewpoint image is generated with reference to the camera 1 image, the camera 2 image, the camera 3 image, and the camera 3 audio, the authentication information is assigned in a case where neither the image nor the audio is edited. At this time, when the editing histories illustrated in Fig. 7B are input to the data evaluation unit 111, since the audio is edited in frames 1000 to 2300 of the recording-time audio, the authentication information can be assigned only to frames 0 to 149 and frame 2301 and subsequent frames.

Fig. 7C illustrates editing process commands in a case where an external audio is added to Fig. 7A, and Fig. 7D illustrates editing histories thereof. Editing process commands 706 and 707 are to get audio data designated by file_1 and to add the audio data to audio tracks of frames 120 to 1500. The editing control unit 102 records frames 120 to 1500 to be combined in an editing history 714. However, since the audio data itself of file_1 is not edited, the audio data of the editing history 714 is not edited.

In this case, in the editing history 713, since the recording-time audio of frames 1000 to 2300 is edited, it is determined that it is possible to assign the authentication information if the generated virtual viewpoint image corresponds to frames 0 to 119, and that it is not possible to assign the authentication information if the generated virtual viewpoint image corresponds to frame 120 and subsequent frames.

In addition, as another example, a case will be considered in which a virtual viewpoint image is generated by adding externally acquired audio data in addition to captured image data by the editing process command 707, and authentication information is assigned to the virtual viewpoint image on condition that neither the image nor the audio is edited. In this case, as a result of the editing process command 707, the audio is added to frames 120 to 1500 as illustrated in the editing history 714. Although there is no change in the externally acquired audio data itself, when the external audio is superimposed on the frames in which the recording-time audio is present, the audio data of virtual viewpoint image of frames 120 to 149 changes. Therefore, a period during which the authentication information can be assigned to the generated virtual viewpoint image is only from frame 0 to frame 119.

An example of generating a virtual viewpoint image has been described. However, the present disclosure is not limited to this, and a 3D model may be generated. In this case, whether to assign the authentication information to the 3D model is determined.

A case will be considered in which the data evaluation unit 111 determines whether it is possible to assign the authentication information by using the material data having a authentication condition illustrated in Fig. 2B, the editing process commands illustrated in Fig. 7C, and the editing histories illustrated in Fig. 7D.

The authentication condition 223 does not permit editing of the foreground model of the camera 3 image, and the authentication condition 227 does not permit editing of the camera 3 audio, but editing of the camera 1 image and the camera 2 image is permitted. When the data evaluation unit 111 evaluates the editing histories 710 to 714, it is not possible to assign the authentication information to frames 120 to 2300 in which the audio is edited by the addition of the external audio by the editing process commands 706 and 707. However, it is determined that it is possible to assign the authentication information to the virtual viewpoint image of frames 0 to 119 and frame 2301 and subsequent frames in which there is no change in the camera 3 image and the camera 3 audio.

Through the above process, it is possible to manage editing details of material data used for generating a virtual viewpoint image, and to determine whether an editing history or generated video satisfies a condition for assigning authentication information of the virtual viewpoint image.

According to the present disclosure, it is possible to provide a 3D model, a virtual viewpoint image, and a material data set indicating that material data used for generation is appropriately edited.

### Second Embodiment

In the first embodiment, the editing history of the material data to be used for the virtual viewpoint image is referred to, and if the authentication condition of each piece of material data is satisfied, the authentication information is assigned to the generated virtual viewpoint image. However, an inappropriate virtual viewpoint image may be generated depending on the combination of pieces of material data. For example, in a virtual viewpoint image used for sports determination, a positional relationship between a plurality of players, a positional relationship between a player and a line, goal, tool, or the like for a game, and a shape thereof needs to maintain a positional relationship and an orientation at the time of recording. In this case, if the positional relationship between the players is changed, a so-called fake image is generated. In the second embodiment, in addition to an authentication condition of each piece of material data, a utilization condition, such as a combination or an arrangement of each piece of material data, is set, and if the authentication condition and utilization condition of each piece of material data are satisfied, authentication information is assigned to a virtual viewpoint image.

The utilization condition in the present embodiment is set for each piece of material data. However, the utilization condition is not limited to this, and may be set in accordance with features of a virtual viewpoint image to be generated. For example, if the ratio of one subject in the virtual viewpoint image is 80% or more, the authentication information may not be assigned.

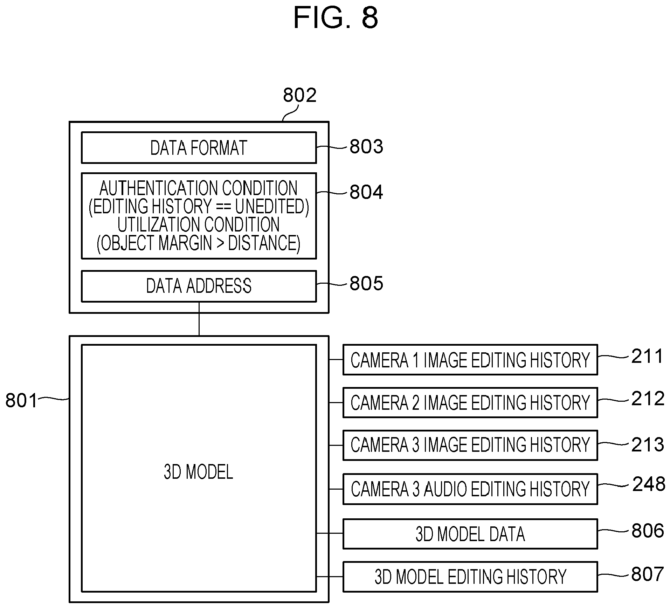

Fig. 8 is a diagram illustrating an authentication condition and utilization condition of material data. In the present embodiment, the material data is described as a 3D model generated based on the camera 1 image to the camera 3 image and the camera 3 audio. For a pointer table 801 of the 3D model, metadata 802 is set. The metadata 802 includes a data format 803, an authentication condition and utilization condition 804, and a data address 805. The pointer table 801 is associated with the camera 1 image editing history 211 to the camera 3 image editing history 213, a camera 3 audio editing history 248, 3D model data 806, and a 3D model editing history 807. In the authentication condition and utilization condition 804, "object margin > distance" is set, indicating a condition related to the arrangement of an object (3D model of a subject) in a virtual space. This condition indicates that it is possible to assign authentication information if the distance between a plurality of 3D models to be arranged is greater than a predetermined value. Note that the utilization condition is not limited to the above. Examples of the utilization condition determined by the data evaluation unit 111 will be described below.

As the utilization condition, a specific user can be permitted to view or edit a virtual viewpoint image with authentication information. In this case, information of the user who is permitted to use material data is used when the authentication information is determined. If this utilization condition is set in the authentication information of the input material data, the data evaluation unit 111 inquires the permitted user by using the authentication data management unit 112.

When a virtual viewpoint image is generated by using the material data, if an operation performed by a user of a service application for editing and generating a virtual viewpoint image is an operation by the user who is permitted to use the material data, it is determined that it is possible to assign the authentication information. In addition, the output control unit 109 may include a pointer to the authentication information assigned to the material data that is referred to in the authentication information of the generated virtual viewpoint image.

As the utilization condition, the assignment of authentication information can be permitted if a virtual viewpoint image is output in a format defined in the utilization condition. This condition is used, for example, to guarantee the quality of the generated virtual viewpoint image or to restrict secondary use. A condition for assigning the authentication information is determined and used so that the output virtual viewpoint image is used with limitations to a predetermined resolution, frame rate, size, bit rate, video format including encryption, and storage area on an output device. If the generated virtual viewpoint image is stored in a format defined in the utilization condition, the data evaluation unit 111 permits the assignment of the authentication information.

As the utilization condition, a condition for prohibiting editing of audio or video can be set. If the editing control unit 102 edits the material data including this utilization condition, the data evaluation unit 111 assigns an editing history to the data and stores the data in the data storage unit 104. The video generation unit 110 stores, in the data storage unit 104, the editing history and the authentication information of the material data used when the virtual viewpoint image is generated. If there is no history of deletion of the authentication information in the editing history of the material data that is referred to when the virtual viewpoint image is generated, the data evaluation unit 111 permits the assignment of the authentication information to the generated virtual viewpoint image.

As the utilization condition, a restriction can be provided to change the color of material data for which the utilization condition is designated. This utilization condition is used for managing the change in the difference between the original color space of the material data and the color space or color depth stored by the image processing unit 103 or the video generation unit 110, the color of texture of video or 3D model included in the material data, and the color of the entire screen. In addition, a change in the color of a specific object or color gamut in the material data, for example, a person's clothes or skin, may be designated as a target. In a case of editing material data having authentication information with restrictions on color change, the editing control unit 102 records the change in an editing history upon detecting editing regarding the color change to a restricted object or the entire screen. The data evaluation unit 111 checks whether there is a restricted editing operation in the editing history of the material data stored in the data storage unit 104. In addition, by transparent synthesis, the data evaluation unit 111 confirms that there is no history of an operation influencing the color of the material data in an upper layer of the material data. If the color is not changed, the data evaluation unit 111 permits the assignment of the authentication information to the generated virtual viewpoint image.

As the utilization condition, a condition for restricting a change in the position of a designated 3D model can be set. This utilization condition is applied to data in which shape information of a generated 3D model and three-dimensional coordinates at which the 3D model can be arranged in the virtual space are predetermined. In a case of editing material data to which this utilization condition is set, upon detecting an editing process command including a change in the arrangement of the 3D model, the editing control unit 102 records the change in the editing history. If there is no history of the change in the arrangement in the editing history of the material data stored in the data storage unit 104, the data evaluation unit 111 permits the assignment of the authentication information.

As the utilization condition, in a virtual viewpoint image in which a background and a foreground are distinguished from each other, editing of the background is prohibited. If there is no change in material data constituting the background, the data evaluation unit 111 permits the assignment of the authentication information to the material data. If the background includes a combination of a plurality of pieces of material data, it is confirmed that all the pieces of material data are not changed. It is also confirmed that the positions and scales of the background and foreground objects are not changed.

As the utilization condition, a condition for restricting the addition of a foreground model can be added. In a virtual viewpoint image in which a background and a foreground are distinguished from each other, this condition prohibits the addition of a new model to the foreground. If an object serving as the foreground is added, the data evaluation unit 111 determines that it is not possible to authenticate the material data. This condition may be designed to have region information in a 3D model space for restricting the addition of the foreground model as necessary and to restrict the addition of a new object in the region.

As the utilization condition, a condition for restricting editing of a foreground model can be set. This condition prohibits editing of material data used for generating a foreground object in a virtual viewpoint image in which a background and a foreground are distinguished from each other. If the material data that is referred to when generating the foreground has an editing history, the data evaluation unit 111 determines that it is not possible to authenticate the material data.

As the utilization condition, whether a specific object is included in a generated virtual viewpoint image can be set. This condition can be used for confirming that a virtual advertisement or logo is included in a generated virtual viewpoint image or to confirm that an object for which secondary distribution is not permitted is not included. The data evaluation unit 111 performs object detection by using pattern matching or artificial intelligence (Al) to determine whether the specific object is included in the generated virtual viewpoint image, and if a desired detection result is obtained, permits the assignment of authentication information to material data.

As the utilization condition, a condition for restricting the editing of an object in a predetermined area can be set. According to this condition, upon editing in a specific area of 2D or 3D video, the data evaluation unit 111 determines that it is not possible to authenticate the material data.

As the utilization condition, a restriction can be set on a region in which a virtual camera is arranged. If the trajectory of a virtual camera path of a virtual viewpoint image does not include a prohibited area, the data evaluation unit 111 permits the assignment of authentication information to material data.

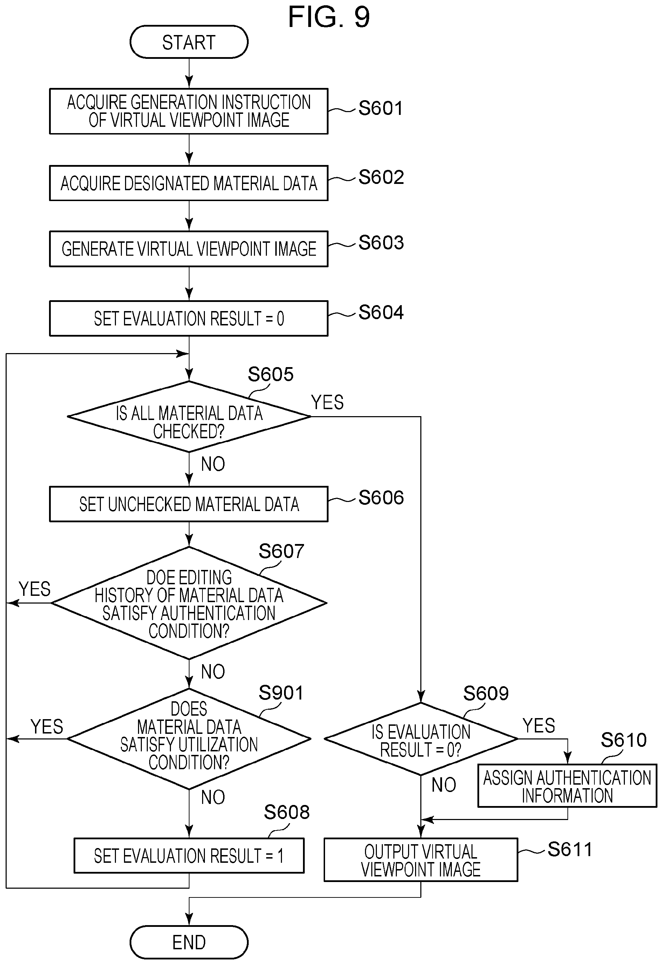

Fig. 9 is a flowchart illustrating a process for outputting a generated virtual viewpoint image with authentication information assigned. Note that S601 to S611 is the same as those in Fig. 6, and a description thereof will be omitted.

In S901, the data evaluation unit 111 determines whether the material data that is set as the evaluation target satisfies a utilization condition. For example, it is assumed that the material data is a 3D model of a track and field athlete A. Furthermore, it is assumed that the utilization condition is "if arranged in a background model of a stadium C together with a 3D model of a track and field athlete B, within 2 m in front of a finish line of the stadium C, the track and field athlete A is closer to the finish line than the track and field athlete B is, and the track and field athlete A reaches the finish line earlier". The generated virtual viewpoint image is checked. If the utilization condition is satisfied, the process proceeds to S605, and if the utilization condition is not satisfied, the process proceeds to S608. Note that the determination of the utilization condition may be performed simultaneously with the determination of the authentication condition. In that case, S901 is incorporated in S607.

Through the above process, the authentication information can be assigned to the virtual viewpoint image satisfying the authentication condition and the utilization condition of the material data. Therefore, the target to which the authentication information is assigned can be set in more detail.

### Third Embodiment

In the first embodiment, the information processing apparatus 100 refers to the editing history of each piece of material data designated by the user, and if the authentication condition of each piece of material data is satisfied, the authentication information is assigned to the generated virtual viewpoint image. However, a case is also assumed in which each piece of material data designated by the user is transmitted to a user device, and the user device generates a virtual viewpoint image. Therefore, in the third embodiment, authentication information is assigned to a combination of a plurality of pieces of material data designated by a user.

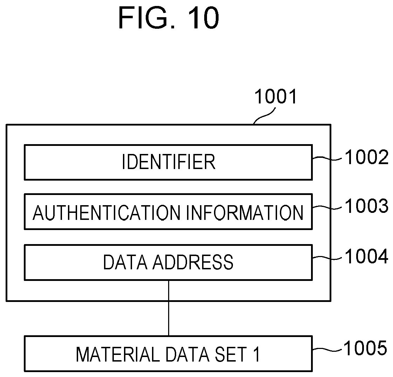

Fig. 10 is a diagram illustrating authentication information of a material data set. The present embodiment will be described using the material data set 1 in Fig. 2A. Metadata 1001 of a material data set 1 1005 includes an identifier 1002 for identifying the details of the material data set 1, authentication information 1003, and a data address 1004. As the identifier 1002, identifiers for identifying the details of the material data set 1, i.e., the camera 1 image to the camera 3 image and the camera 3 audio, are stored.

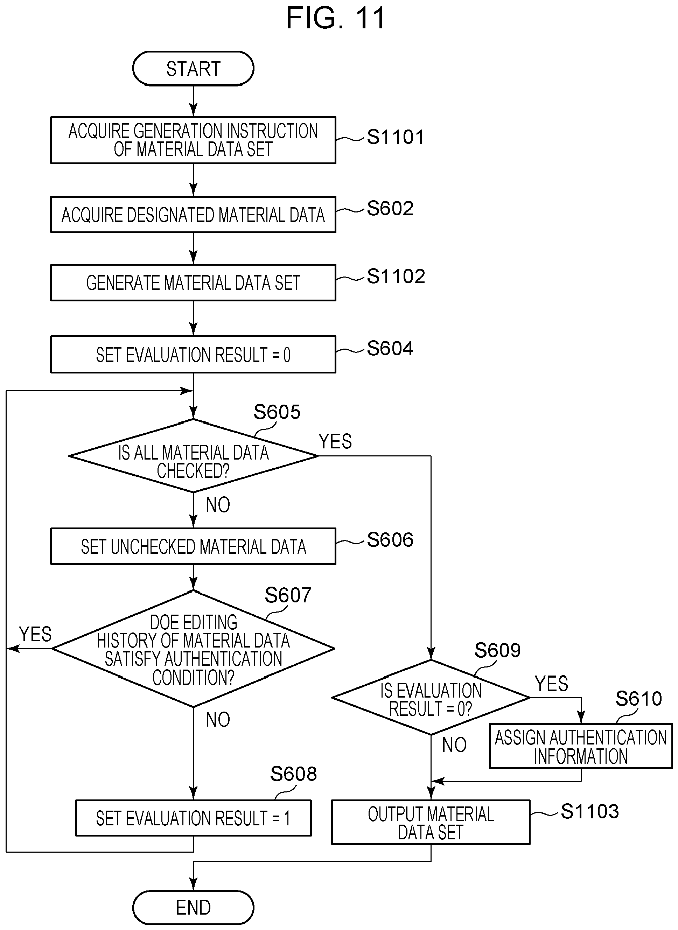

Fig. 11 is a flowchart illustrating a process for outputting a material data set with authentication information assigned.

Note that S602 and S604 to S610 are the same as those in Fig. 6, and a description thereof will be omitted.

In S1101, via the operation unit 117 and the instruction control unit 118, the video output instruction unit 108 acquires a generation instruction of a material data set from a user. Note that the generation instruction includes an instruction for specifying a plurality of pieces of material data.

In S1102, the output control unit 109 generates the material data set.

In S1103, the data evaluation unit 111 assigns authentication information to the material data set.

Through the above process, the authentication information can be assigned to the material data set. In the present embodiment, the material data set 1 has been described as an example. However, the material data set is not limited to this, and a material data set obtained by combining a plurality of 3D models may be used.

In the above-described embodiment, the authentication information is assigned to the virtual viewpoint image or 3D model generated by using the material data. However, the present disclosure is not limited to this. For example, authentication information can be assigned to material data output by inputting the material data to a specific learning model.

Note that a computer program for implementing some or all of the functions of the above-described embodiments may be supplied to an image processing system or the like via a network or various storage media. A computer (or a CPU, a micro-processing unit (MPU), or the like) in the image processing system or the like may read and execute the program. In this case, the program and a storage medium storing the program constitute the present disclosure.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the disclosure is not limited to the disclosed embodiments. The scope of the following claims encompasses all such modifications and equivalent structures and functions.

## Claims

1. An information processing apparatus comprising:
acquisition means (109) configured to acquire editing histories of a plurality of pieces of material data to be used for generating a virtual viewpoint image; and
assigning means (111) configured to assign authentication information to the virtual viewpoint image generated based on the plurality of pieces of material data if each of the editing histories of the plurality of pieces of material data acquired by the acquisition means satisfies a predetermined condition.

2. The information processing apparatus according to Claim 1, wherein the assigning means does not assign the authentication information to the virtual viewpoint image if at least one of the editing histories of the plurality of pieces of material data does not satisfy the predetermined condition.

3. The information processing apparatus according to Claim 1, wherein the predetermined condition is set by a creator who has created the plurality of pieces of material data.

4. The information processing apparatus according to Claim 1, wherein the predetermined condition is a condition indicating an editing detail for which editing of the plurality of pieces of material data is permitted.

5. The information processing apparatus according to Claim 1, wherein the authentication information is information designating an access right for viewing the virtual viewpoint image.

6. The information processing apparatus according to Claim 1, wherein the authentication information is indicated by using a non-fungible token (NFT).

7. The information processing apparatus according to Claim 1, wherein the material data is at least one of 3D model data indicating a 3D model of an object, audio data, and image data.

8. The information processing apparatus according to Claim 7, wherein
the material data is the 3D model data, and
the predetermined condition is a condition indicating editing details of changing a color of the 3D model.

9. The information processing apparatus according to Claim 7, wherein
the material data is the 3D model data, and
the predetermined condition is a condition for restricting a position of the 3D model in a virtual space in which the 3D model is arranged.

10. The information processing apparatus according to Claim 9, wherein the predetermined condition is a condition for restricting the position of the 3D model based on a positional relationship between the 3D model and another 3D model.

11. The information processing apparatus according to Claim 1, wherein the acquisition means acquires the plurality of pieces of material data based on a user operation.

12. The information processing apparatus according to Claim 11, wherein
the plurality of pieces of material data include material data for which an NFT indicating ownership has been issued, and
the acquisition means acquires the material data for which the user has ownership thereof.

13. The information processing apparatus according to Claim 1, wherein the virtual viewpoint image is generated based on a plurality of captured images obtained by a plurality of image capturing apparatuses.

14. An information processing method comprising:
acquiring editing histories of a plurality of pieces of material data to be used for generating a virtual viewpoint image; and
assigning authentication information to the virtual viewpoint image generated based on the plurality of pieces of material data if each of the editing histories of the plurality of pieces of material data acquired in the acquiring satisfies a predetermined condition.

15. A non-transitory computer readable storage medium storing a program for causing a computer to execute a method, the method comprising:
acquiring editing histories of a plurality of pieces of material data to be used for generating a virtual viewpoint image; and
assigning authentication information to the virtual viewpoint image generated based on the plurality of pieces of material data if each of the editing histories of the plurality of pieces of material data acquired in the acquiring satisfies a predetermined condition.
